(19) Europäisches Patentamt
European Patent Office
Office européen des brevets

(11) **EP 3 281 298 B1**

(12) **FASCICULE DE BREVET EUROPEEN**

(45) Date de publication et mention
de la délivrance du brevet:
**27.02.2019 Bulletin 2019/09**

(51) Int Cl.:
***H04B 1/7176*** *(2011.01)*

(21) Numéro de dépôt: **16714872.5**

(22) Date de dépôt: **05.04.2016**

(86) Numéro de dépôt international:
**PCT/EP2016/057434**

(87) Numéro de publication internationale:
**WO 2016/162336 (13.10.2016 Gazette 2016/41)**

(54) **PROCÉDÉ DE TRANSMISSION D'INFORMATIONS BINAIRES PAR UNE LIAISON RADIO UTILISANT UNE MODULATION ULTRA LARGE BANDE**

SENDEVERFAHREN VON BINÄREN INFORMATIONEN MITTELS EINER RADIOVERBINDUNG MIT ULTRABREITBANDMODULATION

BINARY INFORMATION TRANSMISSION METHOD OVER A RADIO LINK USING ULTRA-WIDE BAND MODULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2015 FR 1553087**

(43) Date de publication de la demande:
**14.02.2018 Bulletin 2018/07**

(73) Titulaire: **Safran Electronics & Defense SAS
92100 Boulogne-Billancourt (FR)**

(72) Inventeurs:
• **CHIODINI, Alain
92100 Boulogne Billancourt (FR)**
• **JABRI, Karim
92100 Boulogne Billancourt (FR)**

(74) Mandataire: **Cabinet Le Guen Maillet
3, impasse de la Vigie
CS 71840
35418 Saint-Malo Cedex (FR)**

(56) Documents cités:
**EP-A2- 1 748 577     WO-A1-01/22672**

• **WEIHUA GAO ET AL: "Achieving spectrum efficiency through signal design for ultra wide band sensor networks", SWARM INTELLIGENCE SYMPOSIUM, 2009. SIS '09. IEEE, IEEE, PISCATAWAY, NJ, USA, 30 mars 2009 (2009-03-30), pages 122-128, XP031456287, DOI: 10.1109/SIS.2009.4937854 ISBN: 978-1-4244-2762-8**

**Description**

La présente invention concerne un procédé et un dispositif de transmission d'informations binaires par une liaison radio utilisant une modulation ultra large bande.

Dans les systèmes de communication ultra large bande ou ULB (Ultra Wide Band en anglais ou UWB), l'information binaire est généralement transmise au moyen de la modulation dite « modulation en position d'impulsions » (PPM ou Pulse-Position Modulation en anglais). Les impulsions sont des créneaux temporels de très courte durée typiquement de l'ordre de la nanoseconde ou de la centaine de picosecondes et par conséquent caractérisées par un spectre de fréquence très large.

La modulation en position d'impulsions permet de transmettre sur une liaison point-à-point un symbole de N bits encodé au moyen d'une seule impulsion choisie dans un ensemble de $2^N$ positions temporelles de l'impulsion dans une durée prédéterminée. Ces positions temporelles sont aussi appelées formes temporelles.

La modulation en position d'impulsions est largement utilisée dans les systèmes de communication optiques. En effet, contrairement aux systèmes de communication radioélectriques, ces systèmes souffrent peu des interférences ou du phénomène de trajets multiples. Cependant, aussi avantageuse qu'elle puisse être dans le cadre de ces systèmes, la modulation en position d'impulsions souffre cependant de la limitation suivante : les horloges de l'émetteur et du récepteur doivent être idéalement synchrones afin d'assurer une démodulation optimale.

Une solution pour résoudre les problèmes liés à l'écart fréquentiel et la dérive temporelle des horloges de l'émetteur et du récepteur consiste à effectuer un encodage différentiel des symboles à transmettre. Cette solution dégrade les performances exprimées en termes de taux d'erreur binaire (Bit Error rate ou BER en anglais) du système.

De plus, dans les systèmes de communication radio, la présence additionnelle du phénomène de multi-trajet rend très difficile l'opération de démodulation en raison de la présence dans le signal reçu des répliques de la forme temporelle utilisée pour moduler le symbole reçu.

L'état de la technique pertinent comprend en outre les demandes de brevet WO 01/22672 A1 et P 1 748 577 A2, ainsi que l'article de WEIHUA GAO ET AL: "Achieving spectrum efficiency through signal design for ultra wide band sensor networks", SWARM INTELLIGENCE SYMPOSIUM, 2009. SIS '09. IEEE, IEEE, PISCATAWAY, NJ, USA, 30 mars 2009 (2009-03-30), pages 122-128, DOI: 10.1109/SIS.2009.4937854, ISBN: 978-1-4244-2762-8. La demande de brevet WO 01/22672 A1 décrit un procédé de transmission d'informations binaires par une liaison radio utilisant une modulation ultra large bande, caractérisé en ce que le procédé comporte les étapes de : - formation de symboles comportant une pluralité de bits, - sélection, pour chaque symbole formé, d'une combinaison linéaire d'au moins trois impulsions ultra large bande orthogonales deux à deux parmi un ensemble de combinaisons des au moins trois impulsions ultra large bande orthogonales deux à deux, - transfert, pour chaque combinaison d'au moins deux impulsions ultra large bande orthogonales deux à deux sélectionnées, d'un signal radio.

La présente invention a pour but de résoudre les inconvénients de l'art antérieur en proposant un procédé et un dispositif de transmission d'informations binaires par une liaison radio utilisant une modulation ultra large bande qui soit peu sensible aux trajets multiples.

A cette fin, selon un premier aspect, l'invention propose un procédé de transmission d'informations binaires par une liaison radio utilisant une modulation ultra large bande, caractérisé en ce que le procédé comporte les étapes de :

- formation de symboles comportant une pluralité de bits,
- sélection, pour chaque symbole formé, d'une combinaison d'au moins deux impulsions ultra large bande orthogonales deux à deux parmi un ensemble de combinaisons des au moins deux impulsions ultra large bande orthogonales deux à deux,
- transfert, pour chaque combinaison d'au moins deux impulsions ultra large bande orthogonales deux à deux sélectionnées, d'un signal radio.

La présente invention concerne aussi un dispositif de transmission d'informations binaires par une liaison radio utilisant une modulation ultra large bande, caractérisé en ce que le dispositif comporte:

- des moyens de formation de symboles comportant une pluralité de bits,
- des moyens de sélection, pour chaque symbole formé, d'une combinaison d'au moins deux impulsions ultra large bande orthogonales deux à deux parmi un ensemble de combinaisons des au moins deux impulsions ultra large bande orthogonales deux à deux,
- des moyens de transfert, pour chaque combinaison d'au moins deux impulsions ultra large bande orthogonales deux à deux sélectionnées, d'un signal radio.

Ainsi, la présente invention est peu sensible aux trajets multiples.

Selon un mode particulier de l'invention, au moins trois impulsions ultra large bande orthogonales deux à deux sont sélectionnées parmi un ensemble de combinaisons des au moins trois impulsions ultra large bande orthogonales deux à deux et pour chaque combinaison d'au moins trois impulsions ultra large bande orthogonales deux à deux sélectionnées, un signal radio signal radio est transféré.

Selon un mode particulier de l'invention, l'ensemble de combinaisons des au moins trois impulsions ultra large bande orthogonales deux à deux est obtenu en effectuant des permutations des au moins trois impulsions ultra large bande.

Ainsi, les signaux constitués par la permutation d'un jeu d'impulsions ultra large bande orthogonales deux à deux sont faciles à discriminer, par exemple au moyen d'une batterie de filtres adaptés.

Selon un mode particulier de l'invention, l'ensemble des combinaisons des au moins trois impulsions ultra large bande orthogonales deux à deux est obtenu en effectuant des combinaisons linéaires des au moins deux impulsions ultra large bande.

Selon un mode particulier de l'invention, chaque impulsion ultra large bande d'indice n est représentée par la formule suivante:

$$I_n(t) = P_n(t)G(t)$$

Avec :

$P_n(t)$ : Polynôme de degré n $\left(P_n(t) = \sum_{k=0}^{k=n} a_{k,n} t^k\right)$ où $a_{k,n}$ est un coefficient du polynôme de degré $n$, $k$ un nombre entier et $t$ est le temps,

$G(t)$ : Fonction gaussienne $\left(G(t) = \dfrac{1}{\sqrt{2\pi}\sigma} e^{-\frac{t^2}{2\sigma^2}}\right)$

Ainsi, la présente invention, en utilisant une fonction gaussienne, tire avantage du fait que les valeurs prises par les intégrales sont connues. L'implémentation de la présente invention est ainsi simplifiée.

Selon un mode particulier de l'invention, les coefficients des polynômes sont obtenus itérativement en déterminant en premier le coefficient du polynôme du plus petit degré, puis en déterminant successivement les coefficients des polynômes de degré supérieur.

Ainsi, il est possible créer, de manière simple, un nombre important d'impulsions ultra large bande orthogonales deux à deux.

Selon un mode particulier de l'invention, le procédé comporte en outre l'étape de sélection d'une période temporelle de transmission du signal radio en fonction du symbole formé.

Ainsi, il est possible d'augmenter la taille, en termes de bits, du symbole transmis.

Selon un mode particulier de l'invention, la combinaison est une combinaison d'au moins deux des trois impulsions ultra large bande orthogonales deux à deux $\alpha(t)$, $\beta(t)$ et $\gamma(t)$, dans laquelle :

$$\alpha(t) = \frac{K}{\sqrt{2\pi}\sigma} e^{-\frac{t^2}{2\sigma^2}}$$

où $K$ est un coefficient de normalisation, $\sigma$ est l'écart type d'une Gaussienne compris entre $10^{-10}$ et $10^{-9}$s.

$$\beta(t) = \frac{K}{\sqrt{\pi}\sigma}\left(-\frac{t}{\sigma}\right) e^{-\frac{t^2}{2\sigma^2}}$$

$$\gamma(t) = \frac{K}{2\sqrt{\pi}\sigma}\left(1 - 2\left(\frac{t}{\sigma}\right)^2\right) e^{-\frac{t^2}{2\sigma^2}}.$$

L'invention concerne aussi un procédé de réception d'informations binaires par une liaison radio utilisant une modulation ultra large bande, caractérisé en ce que le procédé comporte les étapes de :

- réception d'un signal radio comportant une combinaison d'au moins deux impulsions ultra large bande orthogonales deux à deux,

- sélection d'un symbole composé de bits correspondant à la combinaison d'au moins deux impulsions ultra large bande orthogonales deux à deux.

L'invention concerne aussi un dispositif de réception d'informations binaires par une liaison radio utilisant une modulation ultra large bande, caractérisé en ce que le dispositif comporte:

- des moyens de réception d'un signal radio comportant une combinaison d'au moins deux impulsions ultra large bande orthogonales deux à deux,
- des moyens de sélection d'un symbole composé de bits correspondant à la combinaison d'au moins deux impulsions ultra large bande orthogonales deux à deux.

En utilisant une impulsion composite formée en concaténant trois impulsions ultra large bande orthogonales deux à deux, l'autocorrélation du signal constitué de ces impulsions ultra large bande produit un pic dont l'amplitude est trois fois plus importante que celui obtenu avec un signal constitué d'une unique impulsion ultra large bande, améliorant ainsi la qualité de réception.

De plus, la démodulation du signal radio reçu est simplifiée par une utilisation de filtres adaptés.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un système de transmission radio ultra large bande de symboles dans lequel la présente invention est implémentée ;
les Figs. 2 représentent des exemples d'impulsions ultra large bande orthogonales deux à deux utilisées dans la présente invention ;
la Fig. 3 représente un émetteur radio ultra large bande selon la présente invention ;
la Fig. 4 représente un récepteur radio ultra large bande selon la présente invention ;
la Fig. 5 représente un premier exemple de transmission dans un système radio ultra large bande de symboles par concaténation d'impulsions ultra large bande orthogonales deux à deux selon la présente invention ;
la Fig. 6 représente un second exemple de transmission dans un système radio ultra large bande de symboles par concaténation d'impulsions ultra large bande orthogonales deux à deux selon la présente invention ;
la Fig. 7 représente un algorithme de transmission de symboles selon la présente invention ;la Fig. 8 représente un algorithme de réception de symboles selon la présente invention.

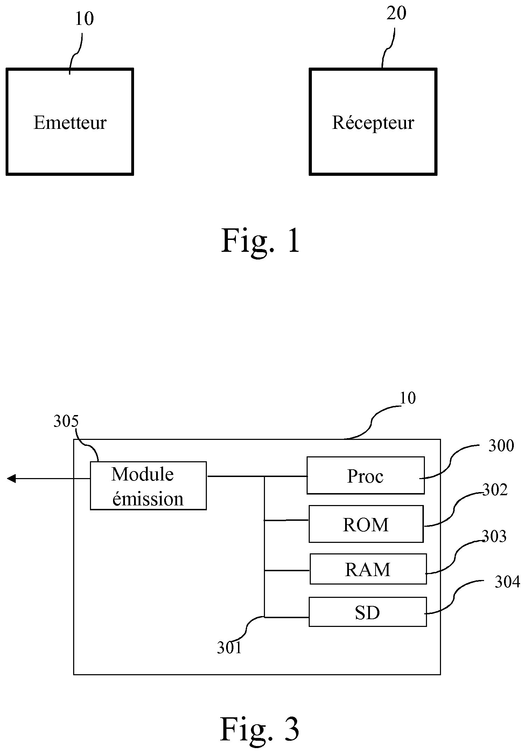

La **Fig. 1** représente un système de transmission radio ultra large bande de symboles dans lequel la présente invention est implémentée.

Le système de transmission radio ultra large bande de séquences binaires représenté dans la Fig. 1 comporte un émetteur 10 et un récepteur 20.

Bien entendu le système de transmission peut comporter un nombre plus important d'émetteurs et/ou de récepteurs.

Selon la présente invention, le système de transmission radio ultra large bande utilise des combinaisons d'impulsions ultra large bande orthogonales deux à deux pour transmettre les symboles.

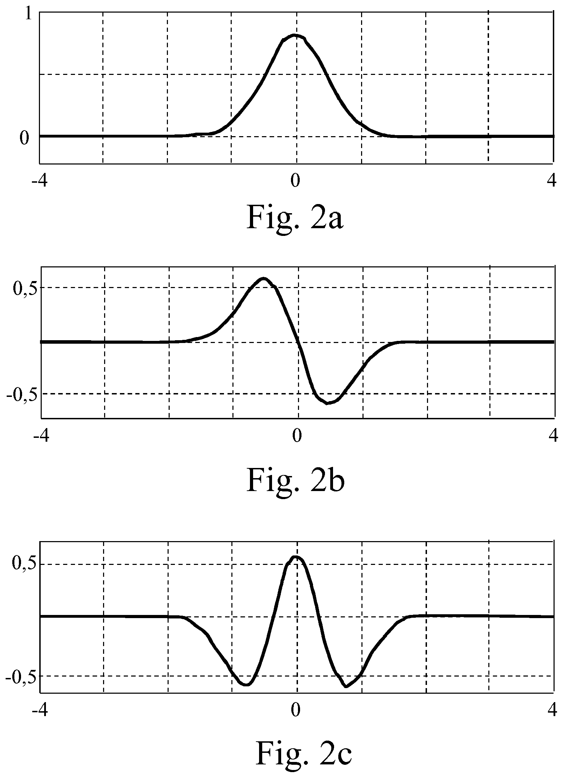

Un exemple d'impulsions ultra large bande orthogonales deux à deux est représenté dans les Figs. 2.

Les **Figs. 2** représentent des exemples d'impulsions ultra large bande orthogonales deux à deux utilisées dans la présente invention.

Selon la présente invention, une impulsion ultra large bande est un signal bref constitué d'au moins une demi-période de sinusoïde multipliée par un signal de pondération.

Les axes horizontaux représentent le temps exprimé en nano secondes et les axes verticaux représentent les amplitudes exprimées en volt ou dans une unité de tension prédéterminée.

La Fig. 2a représente une impulsion ultra large bande $\alpha(t)$ qui a pour équation :

$$\alpha(t) = \frac{K}{\sqrt{2\pi}\sigma} e^{-\frac{t^2}{2\sigma^2}}$$

où K est un coefficient de normalisation, $\sigma$ est l'écart type d'une Gaussienne compris entre $10^{-10}$ et $10^{-9}$s. Par exemple,

K est égal à $10^{-9}$ et $\sigma$ = 0,5 ns.

La Fig. 2b représente une impulsion ultra large bande $\beta(t)$ qui a pour équation :

$$\beta(t) = \frac{K}{\sqrt{\pi}\sigma}\left(-\frac{t}{\sigma}\right)e^{-\frac{t^2}{2\sigma^2}}$$

La Fig. 2c représente une impulsion ultra large bande $\gamma(t)$ qui a pour équation :

$$\gamma(t) = \frac{K}{2\sqrt{\pi}\sigma}\left(1 - 2\left(\frac{t}{\sigma}\right)^2\right)e^{-\frac{t^2}{2\sigma^2}}$$

Les impulsions ultra large bande $\alpha(t)$, $\beta(t)$ et $\gamma(t)$ sont orthogonales deux à deux.

De manière générale, une impulsion ultra large bande d'indice n peut être représentée par la formule suivante:

$$I_n(t) = P_n(t)G(t)$$

Avec :

$P_n(t)$ : Polynôme de degré n $\left(P_n(t) = \sum_{k=0}^{k=n} a_{k,n}t^k\right)$ où $a_{k,n}$ est un coefficient du polynôme de degré *n*, *k* un nombre entier, *n* est l'indice de l'impulsion ultra large bande et t est le temps,

$G(t)$ : Fonction gaussienne $\left(G(t) = \frac{1}{\sqrt{2\pi}\sigma}e^{-\frac{t^2}{2\sigma^2}}\right)$

Le produit scalaire $\mathcal{S}_{m,n}$ de deux impulsions ultra large bande est :

$$\mathcal{S}_{m,n} = \int_{-\infty}^{+\infty} I_m(t)\,I_n(t)dt = \delta_{m,n}$$

Où $\delta_{m,n}$ désigne le symbole de Kronecker :

$$\begin{cases}\delta_{m,n} = 0 \; si \; m \neq n \\ \delta_{m,n} = 1 \; si \; m = n\end{cases}$$

Soit la formule suivante : $U_n = \int_{0}^{+\infty} t^n e^{-at^b}dt = \frac{1}{b}a^{-\frac{n+1}{b}}\Gamma\left(\frac{n+1}{b}\right)$ où $\Gamma$ désigne la fonction gamma :

$$\Gamma : x \; \mapsto \int_{0}^{+\infty} t^{x-1}e^{-t}dt$$

Il est à remarquer ici que la présente invention tire avantage du fait que les valeurs prises par les intégrales de la forme $\int_{-\infty}^{+\infty} t^n e^{-at^b}dt$ sont connues.

Appelons $V_n$ l'intégrale suivante :

$$V_n = \int_{-\infty}^{+\infty} t^n e^{-at^b}dt$$

où $a$ et $b$ sont des constantes, par exemple $a = \dfrac{1}{\sigma^2}$ et $b = 2$

Si $n$ est pair alors nous avons :

$$V_n = \int_{-\infty}^{+\infty} t^n e^{-\frac{t^2}{\sigma^2}} dt = 2U_n = 2\int_0^{+\infty} t^n e^{-\frac{t^2}{\sigma^2}} dt = \sigma^{n+1} \Gamma\left(\frac{n+1}{2}\right)$$

Sinon :

$$V_n = 0$$

A partir de ce résultat, le produit scalaire $S_{m,n}$ peut être calculé itérativement en partant de $m = 0$.

$$S_{0,0} = \int_{-\infty}^{+\infty} I_0(t)\, I_0(t)\, dt = \int_{-\infty}^{+\infty} I_0^2(t)\, dt = 1$$

Pour $m = 0$ :

$$\int_{-\infty}^{+\infty} P_0^2(t) G^2(t)\, dt = \int_{-\infty}^{+\infty} a_{0,0}^2 \frac{1}{2\pi\sigma^2} e^{-\frac{t^2}{\sigma^2}} dt = 1$$

$$a_{0,0}^2 \int_{-\infty}^{+\infty} e^{-\frac{t^2}{\sigma^2}} dt = a_{0,0}^2 \sigma \Gamma\left(\frac{1}{2}\right) = 2\pi\sigma^2$$

$$a_{0,0}^2 \Gamma\left(\frac{1}{2}\right) \sigma = 2\pi\sigma^2$$

$$a_{0,0} = \pm\sqrt{\frac{2\pi\sigma}{\Gamma\left(\frac{1}{2}\right)}} = \pm\sqrt{2\sqrt{\pi}\sigma}$$

Pour $m = 1$, deux équations sont à écrire :

$$S_{1,1} = 1$$

et

$$S_{0,1} = 0$$

$$S_{1,1} = \int_{-\infty}^{+\infty} I_1(t)\, I_1(t)\, dt = \int_{-\infty}^{+\infty} I_1^2(t)\, dt = 1$$

$$\int_{-\infty}^{+\infty} P_1^2(t)G^2(t)dt = \int_{-\infty}^{+\infty} \left(a_{1,1}t + a_{0,1}\right)^2 \frac{1}{2\pi\sigma^2} e^{-\frac{t^2}{\sigma^2}}dt = 1$$

$$\frac{1}{2\pi\sigma^2}\int_{-\infty}^{+\infty} \left(a_{1,1}^2 t^2 + 2a_{1,1}a_{0,1}t + a_{0,1}^2\right)e^{-\frac{t^2}{\sigma^2}}dt = 1$$

$$a_{1,1}^2 \int_{-\infty}^{+\infty} t^2 e^{-\frac{t^2}{\sigma^2}}dt + 2a_{1,1}a_{0,1}\int_{-\infty}^{+\infty} te^{-\frac{t^2}{\sigma^2}}dt + a_{0,1}^2 \int_{-\infty}^{+\infty} e^{-\frac{t^2}{\sigma^2}}dt = 2\pi\sigma^2$$

$$a_{1,1}^2 \Gamma\left(\frac{3}{2}\right)\sigma^3 + a_{0,1}^2 \Gamma\left(\frac{1}{2}\right)\sigma = 2\pi\sigma^2$$

$$a_{1,1}^2 \Gamma\left(\frac{3}{2}\right)\sigma^2 + a_{0,1}^2 \Gamma\left(\frac{1}{2}\right) = 2\pi\sigma$$

$$a_{1,1}^2 \Gamma\left(\frac{3}{2}\right)\sigma^2 + a_{0,1}^2 \Gamma\left(\frac{1}{2}\right) = 2\pi\sigma$$

$$S_{0,1} = \int_{-\infty}^{+\infty} I_0(t)\, I_1(t)dt = 0$$

$$\int_{-\infty}^{+\infty} P_0(t)P_1(t)G^2(t)dt = \int_{-\infty}^{+\infty} a_{0,0}\left(a_{1,1}t + a_{0,1}\right)\frac{1}{2\pi\sigma^2} e^{-\frac{t^2}{\sigma^2}}dt = 0$$

$$a_{1,1}\int_{-\infty}^{+\infty} te^{-\frac{t^2}{\sigma^2}}dt + a_{0,1}\int_{-\infty}^{+\infty} e^{-\frac{t^2}{\sigma^2}}dt = 0$$

$$a_{0,1}\Gamma\left(\frac{1}{2}\right)\sigma = 0$$

$$\Rightarrow a_{0,1} = 0$$

D'où, D'où, $a_{1,1} = \pm\sqrt{\dfrac{2\pi}{\Gamma\left(\frac{3}{2}\right)\sigma}} = \pm 2\sqrt{\dfrac{\sqrt{\pi}}{\sigma}}$

Pour m = 2, trois équations sont à écrire :

$$S_{2,2} = 1, S_{0,2} = 0$$

et

$$S_{1,2} = 0$$

$$S_{2,2} = \int_{-\infty}^{+\infty} I_2(t) \, I_2(t) dt = \int_{-\infty}^{+\infty} I_2^2(t) dt = 1$$

$$\int_{-\infty}^{+\infty} P_2^2(t) G^2(t) dt = \int_{-\infty}^{+\infty} \left(a_{2,2} t^2 + a_{1,2} t + a_{0,2}\right)^2 \frac{1}{2\pi\sigma^2} e^{-\frac{t^2}{\sigma^2}} dt = 1$$

$$\frac{1}{2\pi\sigma^2} \int_{-\infty}^{+\infty} \left(a_{2,2}^2 t^4 + a_{1,2}^2 t^2 + a_{0,2}^2 + 2a_{2,2}a_{1,2}t^3 + 2a_{2,2}a_{0,2}t^2 + 2a_{1,2}a_{0,2}t\right) e^{-\frac{t^2}{\sigma^2}} dt$$
$$= 1$$

$$\frac{1}{2\pi\sigma^2} \int_{-\infty}^{+\infty} \left(a_{2,2}^2 t^4 + 2a_{2,2}a_{1,2}t^3 + \left(a_{1,2}^2 + 2a_{2,2}a_{0,2}\right)t^2 + 2a_{1,2}a_{0,2}t + a_{0,2}^2\right) e^{-\frac{t^2}{\sigma^2}} dt$$
$$= 1$$

$$a_{2,2}^2 \int_{-\infty}^{+\infty} t^4 e^{-\frac{t^2}{\sigma^2}} dt + \left(a_{1,2}^2 + 2a_{2,2}a_{0,2}\right) \int_{-\infty}^{+\infty} t^2 e^{-\frac{t^2}{\sigma^2}} dt + a_{0,2}^2 \int_{-\infty}^{+\infty} e^{-\frac{t^2}{\sigma^2}} dt = 2\pi\sigma^2$$

$$a_{2,2}^2 \, \Gamma\left(\frac{5}{2}\right) \sigma^5 + \left(a_{1,2}^2 + 2a_{2,2}a_{0,2}\right) \Gamma\left(\frac{3}{2}\right) \sigma^3 + a_{0,2}^2 \Gamma\left(\frac{1}{2}\right) \sigma = 2\pi\sigma^2$$

$$a_{2,2}^2 \, \Gamma\left(\frac{5}{2}\right) \sigma^4 + \left(a_{1,2}^2 + 2a_{2,2}a_{0,2}\right) \Gamma\left(\frac{3}{2}\right) \sigma^2 + a_{0,2}^2 \Gamma\left(\frac{1}{2}\right) = 2\pi\sigma$$

$$S_{0,2} = \int_{-\infty}^{+\infty} I_0(t) \, I_2(t) dt = 0$$

$$\int_{-\infty}^{+\infty} P_0(t) P_2(t) G^2(t) dt = \int_{-\infty}^{+\infty} a_{0,0} \left(a_{2,2} t^2 + a_{1,2} t + a_{0,2}\right) \frac{1}{2\pi\sigma^2} e^{-\frac{t^2}{\sigma^2}} dt = 0$$

$$\int_{-\infty}^{+\infty} \left(a_{2,2} t^2 + a_{1,2} t + a_{0,2}\right) e^{-\frac{t^2}{\sigma^2}} dt = 0$$

$$a_{2,2} \int_{-\infty}^{+\infty} t^2 e^{-\frac{t^2}{\sigma^2}} dt + a_{0,2} \int_{-\infty}^{+\infty} e^{-\frac{t^2}{\sigma^2}} dt = 0$$

$$a_{2,2} \Gamma\left(\frac{3}{2}\right) \sigma^3 + a_{0,2} \Gamma\left(\frac{1}{2}\right) \sigma = 0$$

$$a_{2,2}\Gamma\left(\frac{3}{2}\right)\sigma^2 + a_{0,2}\Gamma\left(\frac{1}{2}\right) = 0$$

$$\mathcal{S}_{1,2} = \int_{-\infty}^{+\infty} I_1(t)\,I_2(t)dt = 0$$

$$\int_{-\infty}^{+\infty} P_1(t)P_2(t)G^2(t)dt = \int_{-\infty}^{+\infty}\left(a_{1,1}t + a_{0,1}\right)\left(a_{2,2}t^2 + a_{1,2}t + a_{0,2}\right)\frac{1}{2\pi\sigma^2}e^{-\frac{t^2}{\sigma^2}}dt$$

$$= 0$$

$$\frac{1}{2\pi\sigma^2}\int_{-\infty}^{+\infty}\left(a_{2,2}a_{1,1}t^3 + \left(a_{2,2}a_{0,1} + a_{1,2}a_{1,1}\right)t^2 + \left(a_{0,2}a_{1,1} + a_{1,2}a_{0,1}\right)t\right.$$

$$\left. + a_{0,2}a_{0,1}\right)e^{-\frac{t^2}{\sigma^2}}dt = 0$$

$$\left(a_{2,2}a_{0,1} + a_{1,2}a_{1,1}\right)\int_{-\infty}^{+\infty} t^2 e^{-\frac{t^2}{\sigma^2}}dt + a_{0,2}a_{0,1}\int_{-\infty}^{+\infty} e^{-\frac{t^2}{\sigma^2}}dt = 0$$

$$\left(a_{2,2}a_{0,1} + a_{1,2}a_{1,1}\right)\Gamma\left(\frac{3}{2}\right)\sigma^3 + a_{0,2}a_{0,1}\Gamma\left(\frac{1}{2}\right)\sigma = 0$$

$$\left(a_{2,2}a_{0,1} + a_{1,2}a_{1,1}\right)\Gamma\left(\frac{3}{2}\right)\sigma^2 + a_{0,2}a_{0,1}\Gamma\left(\frac{1}{2}\right) = 0$$

$$\pm a_{1,2}\sqrt{\frac{2\pi}{\Gamma\left(\frac{3}{2}\right)\sigma}}\,\Gamma\left(\frac{3}{2}\right)\sigma^2 = 0$$

$$\Rightarrow a_{1,2} = 0$$

Ainsi

$$a_{2,2} = \pm\sqrt{\frac{2\pi}{\left(\Gamma\left(\frac{5}{2}\right) - \frac{\Gamma^2\left(\frac{3}{2}\right)}{\Gamma\left(\frac{1}{2}\right)}\right)\sigma^3}} = \pm 2\sqrt{\frac{\sqrt{\pi}}{\sigma^3}}$$

Et:

$$a_{0,2} = \mp \sqrt{\frac{2\pi\Gamma^2\left(\frac{3}{2}\right)\sigma}{\Gamma\left(\frac{1}{2}\right)\left(\Gamma\left(\frac{1}{2}\right)\Gamma\left(\frac{5}{2}\right) - \Gamma^2\left(\frac{3}{2}\right)\right)}} = \mp\sqrt{\sqrt{\pi}\sigma}$$

Les coefficients des polynômes nécessaires à la génération d'impulsions ultra large bande peuvent ainsi être déterminés.

Pour > 2, il y a $m$+1 équations à écrire. Une première équation pour exprimer que le produit scalaire de la fonction $I_m$ par elle-même qui est égale à un :

$$S_{m,m} = 1$$

et $m$ équations pour exprimer l'orthogonalité de la fonction $I_m$ avec le jeu de fonctions $\{I_k\}_{0 \leq k < m}$ :

$$S_{k,m} = 0.$$

La **Fig. 3** représente un émetteur radio ultra large bande selon la présente invention.

L'émetteur 10 comprend :

- un processeur, micro-processeur, ou microcontrôleur 300 ;
- une mémoire volatile 303 ;
- une mémoire non volatile 302;
- éventuellement, un lecteur 304 de medium de stockage, tel qu'un lecteur de carte SD (*Secure Digital Card* en anglais ou *Carte Numérique Sécurisée* en français);
- une interface radio 305 ;
- un bus de communication 301 reliant le processeur 300 à la mémoire ROM 302, à la mémoire RAM 303, au lecteur de médium de stockage 304 et à l'interface radio 305.

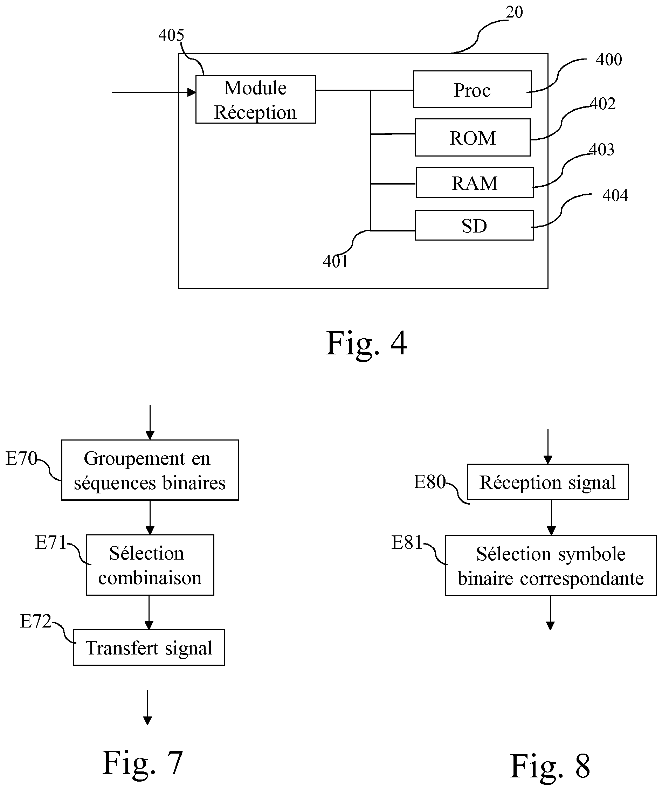

Le processeur 300 est capable d'exécuter des instructions chargées dans la mémoire volatile 303 à partir de la mémoire non volatile 202, d'une mémoire externe (non représentée), d'un support de stockage, tel qu'une carte SD ou autre, ou d'un réseau de communication. Lorsque l'émetteur 10 est mis sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec la Fig. 7.

Tout ou partie du procédé décrit en relation avec la Fig. 7 peut être implémenté sous forme logicielle par exécution d'un ensemble d'instructions par une machine programmable, tel qu'un DSP *(Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un récepteur radio ultra large bande selon la présente invention.

Le récepteur 20 comprend :

- un processeur, micro-processeur, ou microcontrôleur 400 ;
- une mémoire volatile 403 ;
- une mémoire non volatile 402;
- éventuellement, un lecteur 404 de medium de stockage, tel qu'un lecteur de carte SD (*Secure Digital Card* en anglais ou *Carte Numérique Sécurisée* en français);
- une interface radio 405 ;
- un bus de communication 401 reliant le processeur 400 à la mémoire ROM 402, à la mémoire RAM 403, au lecteur de médium de stockage 404 et à l'interface radio 405.

Le processeur 400 est capable d'exécuter des instructions chargées dans la mémoire volatile 403 à partir de la mémoire non volatile 402, d'une mémoire externe (non représentée), d'un support de stockage, tel qu'une carte SD ou autre, ou d'un réseau de communication. Lorsque le récepteur 20 est mis sous tension, le processeur 400 est capable de lire de la mémoire volatile 403 des instructions et de les exécuter. Ces instructions forment un programme d'ordinateur qui cause la mise en oeuvre, par le processeur 400, de tout ou partie du procédé décrit en relation avec la Fig. 8.

Tout ou partie du procédé décrit en relation avec la Fig. 8 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

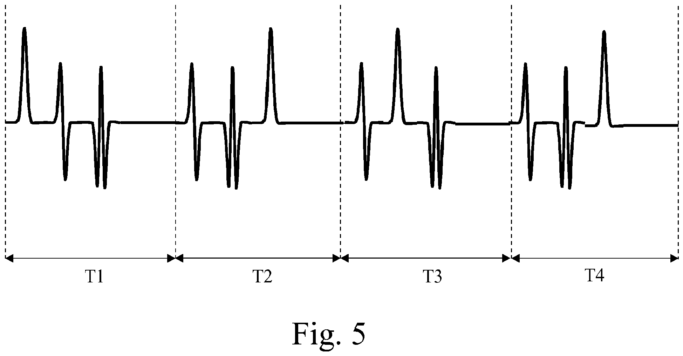

La Fig. 5 représente un premier exemple de transmission dans un système radio ultra large bande de symboles par concaténation d'impulsions ultra large bande orthogonales deux à deux selon la présente invention.

Les symboles à transmettre sont représentés au moyen de concaténations d'impulsions ultra large bande correspondant à des permutations des impulsions ultra large bande par exemple égales à $\alpha(t)$, $\beta(t)$ et $\gamma(t)$. Soit $M$ le nombre des d'impulsions ultra large bande, il est possible de former $M!$ permutations différentes, la taille N des symboles transmis est majorée par $T = \log_2(M!))$.

Ainsi, si $M = 3$, $T = 2,58$ bits peuvent être transmis. Il est alors possible de transmettre des symboles de taille $N \leq 2$ bits.

Dans l'exemple de la Fig. 5 où $\alpha(t)$, $\beta(t)$ et $\gamma(t)$ désignent les trois impulsions ultra large bande utilisées pour construire les formes temporelles permettant d'encoder les symboles à transmettre, si nous choisissons $N = 2$ alors nous pouvons former le tableau de correspondance symbole forme temporelle suivant :

| Symbole | Impulsions ultra large bande à utiliser |
|---------|------------------------------------------|
| 00 | $\alpha(t)\beta(t)\gamma(t)$ |
| 01 | $\alpha(t)\gamma(t)\beta(t)$ |
| 10 | $\beta(t)\alpha(t)\gamma(t)$ |
| 11 | $\beta(t)\gamma(t)\alpha(t)$ |
| SR$_1$ | $\gamma(t)\alpha(t)\beta(t)$ |
| SR$_2$ | $\gamma(t)\beta(t)\alpha(t)$ |

Où SR$_1$ et SR$_2$ désignent par exemple des symboles réservés qui par exemple et de manière non limitative sont utilisés pour une correction d'erreur.

Ainsi, selon l'exemple de la Fig. 5, le symbole 00 est transmis pendant l'intervalle de temps noté T1, le symbole 11 est transmis pendant l'intervalle de temps noté T2, le symbole 10 est transmis pendant l'intervalle de temps noté T3 et le symbole 11 est transmis pendant l'intervalle de temps noté T4.

Il est à remarquer que les durées des intervalles de temps T1, T2, T3 et T4 sont identiques.

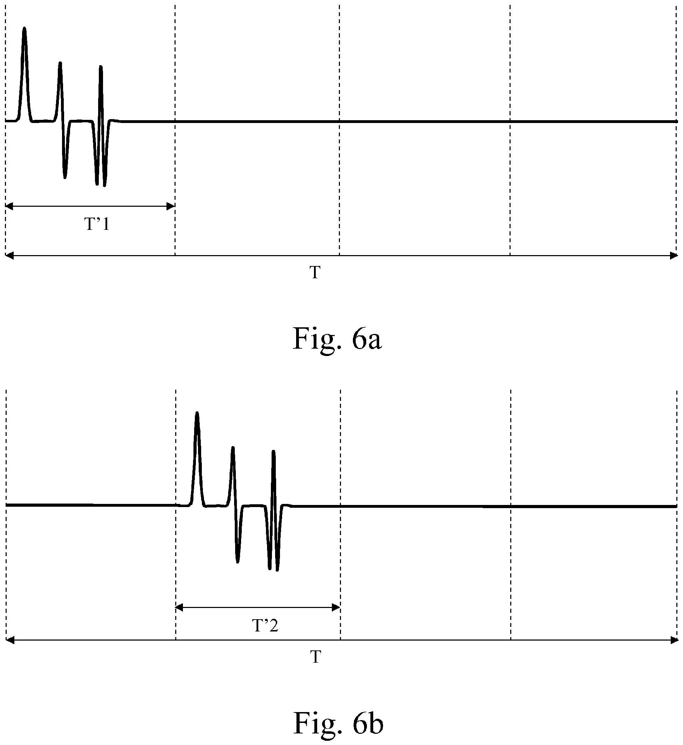

La **Fig. 6** représente un second exemple de transmission dans un système radio ultra large bande de symboles par concaténation d'impulsions ultra large bande orthogonales deux à deux selon la présente invention.

Le second exemple de transmission est une application du premier exemple de transmission de la Fig. 5 dans une modulation en position d'impulsions.

Dans l'exemple des Figs. 6, une période T se décompose en quatre sous périodes.

La position des concaténations d'impulsions ultra large bande dans l'une des sous périodes est utilisée comme moyen de transmission valeurs binaires, augmentant ainsi la taille du symbole transmis.

Par exemple, dans la Fig. 6a, la concaténation d'impulsions ultra large bande est dans la sous période T'1 et correspond à la valeur binaire 0000.

Par exemple, dans la Fig. 6b, la concaténation d'impulsions ultra large bande est dans la sous période T'1 et correspond à la valeur binaire 0100.

Dans un troisième exemple de réalisation, l'ensemble des combinaisons d'au moins deux impulsions ultra large bande orthogonales deux à deux est obtenu en effectuant des combinaisons linéaires d'au moins deux impulsions ultra large bande orthogonales deux à deux. Les impulsions ultra large bande orthogonales deux à deux sont utilisées comme une base des séquences à transmettre.

En d'autres termes, chaque combinaison est une combinaison linéaire des impulsions ultra large bande orthogonales deux à deux pondérées par des coefficients binaires 0 ou 1. Il est à remarquer ici que les impulsions utilisées pour la combinaison linéaire ont la même durée et débutent au même instant.

Dans le cas où trois impulsions $\alpha(t), \beta(t), \gamma(t)$ deux à deux orthogonales sont utilisées alors nous pouvons utiliser le codage suivant :

| $\alpha(t)$ | $\beta(t)$ | $\gamma(t)$ | Signal résultant | Mot binaire transmis |
|---|---|---|---|---|
| 0 | 1 | 1 | $\beta(t) + \gamma(t)$ | 00 |
| 1 | 0 | 1 | $\alpha(t) + y(t)$ | 01 |
| 1 | 1 | 0 | $\alpha(t) + \beta(t)$ | 10 |
| 1 | 1 | 1 | $\alpha(t) + \beta(t) + \gamma(t)$ | 11 |

Dans le cas où N impulsions $\alpha_n(t)$, $1 \le n \le N$, deux à deux orthogonales sont utilisées, le nombre de possibilités de codage C est égal à :

$$C(N) = 2^N - \binom{0}{N} - \binom{1}{N} = 2^N - (1 + N)$$

Avec

$$\binom{n}{N} = \frac{N!}{(N-n)!\,n!}$$

La taille des symboles binaires qu'il est possible de former est :

$$M = \left\lfloor \log_2\big(C(N)\big) \right\rfloor$$

Où $\lfloor \cdot \rfloor$ désigne la partie entière par défaut.

La **Fig. 7** représente un algorithme de transmission de symboles selon la présente invention.

Plus précisément, le présent algorithme est exécuté par le processeur 300 de l'émetteur 10.

A l'étape E70, le processeur 300 groupe les informations binaires à transmettre sous forme de symboles. Selon le premier exemple, un symbole comporte deux bits, selon le second exemple, un symbole comporte quatre bits.

A l'étape suivante E71, le processeur 300 sélectionne les combinaisons d'impulsions ultra large bande correspondant à chaque symbole tel que par exemple à l'aide d'une table telle que décrite dans les différents modes de réalisation susmentionnés.

A l'étape suivante E72, le processeur 300 commande le transfert par l'interface radio 305 d'un signal radio pour chaque combinaison d'impulsions ultra large bande sélectionnée. Les signaux radio sont par exemple transmis à une périodicité constante de manière à permettre une transmission par plusieurs émetteurs multiplexés temporellement.

La **Fig. 8** représente un algorithme de réception de symboles selon la présente invention.

Plus précisément, le présent algorithme est exécuté par le processeur 400 du récepteur 20.

A l'étape E80, le processeur 400 détecte la réception par l'interface radio 405 d'un signal radio pour chaque combinaison d'impulsions ultra large bande.

A l'étape suivante E81, le processeur 400 sélectionne le symbole binaire correspondant aux combinaisons d'impulsions ultra large bande reçues, tel que par exemple à l'aide d'une table telle que décrite dans les différents modes de réalisation susmentionnés.

Bien entendu, la présente invention n'est nullement limitée aux modes de réalisation décrits ici

## Revendications

**1.** Procédé de transmission d'informations binaires par une liaison radio utilisant une modulation ultra large bande, **caractérisé en ce que** le procédé comporte les étapes de :

    - formation (E70) de symboles comportant une pluralité de bits,
    - sélection, (E71) pour chaque symbole formé, d'une combinaison d'au moins trois impulsions ultra large bande orthogonales deux à deux parmi un ensemble de combinaisons des au moins trois impulsions ultra large bande orthogonales deux à deux, l'ensemble des combinaisons des au moins trois impulsions ultra large bande orthogonales deux à deux est obtenu en effectuant des permutations des au moins trois impulsions ultra large bande et en concaténant temporellement les au moins trois impulsions,
- transfert, (E72) pour chaque combinaison d'au moins trois impulsions ultra large bande orthogonales deux à deux sélectionnées, d'un signal radio.

2. Procédé selon la revendication 1, **caractérisé en ce que** chaque impulsion ultra large bande d'indice n est représentée par la formule suivante:

$$I_n(t) = P_n(t)G(t)$$

Avec :

$P_n(t)$ : Polynôme de degré n $\left(P_n(t) = \sum_{k=0}^{k=n} a_{k,n} t^k\right)$ où $a_{k,n}$ est un coefficient du polynôme de degré $n$, $k$ un nombre entier, $n$ est l'indice de l'impulsion ultra large bande, et t est le temps,

$G(t)$ : Fonction gaussienne $\left(G(t) = \dfrac{1}{\sqrt{2\pi}\sigma} e^{-\frac{t^2}{2\sigma^2}}\right)$.

3. Procédé selon la revendication 2, **caractérisé en ce que** les coefficients des polynômes sont obtenus itérativement en déterminant en premier le coefficient du polynôme du plus petit degré, puis en déterminant successivement les coefficients des polynômes de degré supérieur.

4. Procédé selon l'une quelconque des revendications précédentes, **caractérisé en ce que** le procédé comporte en outre l'étape de sélection d'une période temporelle de transmission du signal radio en fonction du symbole formé.

5. Procédé selon la revendication 1, **caractérisé en ce que** la combinaison est une combinaison des trois impulsions ultra large bande orthogonales deux à deux $\alpha(t)$, $\beta(t)$ et $\gamma(t)$, dans laquelle :

$$\alpha(t) = \frac{K}{\sqrt{2\pi}\sigma} e^{-\frac{t^2}{2\sigma^2}}$$

où $K$ est un coefficient de normalisation et $\sigma$ est l'écart type d'une Gaussienne.

$$\beta(t) = \frac{K}{\sqrt{\pi}\sigma}\left(-\frac{t}{\sigma}\right) e^{-\frac{t^2}{2\sigma^2}}$$

$$\gamma(t) = \frac{K}{2\sqrt{\pi}\sigma}\left(1 - 2\left(\frac{t}{\sigma}\right)^2\right) e^{-\frac{t^2}{2\sigma^2}}.$$

6. Dispositif de transmission d'informations binaires par une liaison radio utilisant une modulation ultra large bande, **caractérisé en ce que** le dispositif comporte:

- des moyens de formation de symboles comportant une pluralité de bits,
- des moyens de sélection, pour chaque symbole formé, d'une combinaison d'au moins trois impulsions ultra large bande orthogonales deux à deux parmi un ensemble de combinaisons des au moins trois impulsions ultra large bande orthogonales deux à deux, l'ensemble des combinaisons des au moins trois impulsions ultra large bande orthogonales deux à deux est obtenu en effectuant des permutations des au moins trois impulsions ultra large bande et en concaténant temporellement les au moins trois impulsions,
- des moyens de transfert, pour chaque combinaison d'au moins trois impulsions ultra large bande orthogonales deux à deux sélectionnées, d'un signal radio.

7. Procédé de réception d'informations binaires par une liaison radio utilisant une modulation ultra large bande, **ca-**

**ractérisé en ce que** le procédé comporte les étapes de :

- réception d'un signal radio comportant une combinaison d'au moins trois impulsions ultra large bande orthogonales deux à deux,
- sélection d'un symbole composé de bits correspondant à la combinaison d'au moins trois impulsions ultra large bande orthogonales deux à deux parmi un ensemble de combinaisons des au moins trois impulsions ultra large bande orthogonales deux à deux,, l'ensemble des combinaisons des au moins trois impulsions ultra large bande orthogonales deux à deux est obtenu en effectuant des permutations des au moins trois impulsions ultra large bande et en concaténant temporellement les au moins trois impulsions.

8. Dispositif de réception d'informations binaires par une liaison radio utilisant une modulation ultra large bande, **caractérisé en ce que** le dispositif comporte:

- des moyens de réception d'un signal radio comportant une combinaison d'au moins trois impulsions ultra large bande orthogonales deux à deux,
- des moyens de sélection d'un symbole composé de bits correspondant à la combinaison d'au moins trois impulsions ultra large bande orthogonales deux à deux parmi un ensemble de combinaisons des au moins trois impulsions ultra large bande orthogonales deux à deux, l'ensemble des combinaisons des au moins trois impulsions ultra large bande orthogonales deux à deux est obtenu en effectuant des permutations des au moins trois impulsions ultra large bande et en concaténant temporellement les au moins trois impulsions.

**Patentansprüche**

1. Verfahren zum Übertragen von binären Informationen über eine Funkverbindung, die eine Ultrabreitbandmodulation verwendet, **dadurch gekennzeichnet, dass** das Verfahren die folgenden Schritte umfasst:

- Erzeugen (E70) von Symbolen, die mehrere Bits enthalten,
- Auswählen (E71) für jedes erzeugte Symbol einer Kombination von wenigstens drei paarweise orthogonalen Ultrabreitbandimpulsen aus einer Gesamtheit von Kombinationen von wenigstens drei paarweise orthogonalen Ultrabreitbandimpulsen, wobei die Gesamtheit von Kombinationen von wenigstens drei paarweise orthogonalen Ultrabreitbandimpulsen durch Ausführen von Permutationen an den wenigstens drei Ultrabreitbandimpulsen und durch zeitliches Verketten der wenigstens drei Impulse erhalten wird,
- Übertragen (E72) eines Funksignals für jede Kombination von wenigstens drei ausgewählten paarweise orthogonalen Ultrabreitbandimpulsen.

2. Verfahren nach Anspruch 1, **dadurch gekennzeichnet, dass** jeder Ultrabreitbandimpuls mit Index n durch die folgende Formel dargestellt wird:

$$I_n\left(t\right) = P_n\left(t\right) G\left(t\right)$$

wobei:

$P_n(t)$: Polynom mit Grad n ($P_n\left(t\right) = \sum_{k=0}^{k=n} a_{k,n} t^k$), wobei $a_{k,n}$ ein Koeffizient des Polynoms mit Grad n ist, $k$ eine ganzen Zahl ist, $n$ der Index des Ultrabreitbandimpulses ist und t die Zeit ist,

$G(t)$: Gauß-Funktion ($G\left(t\right) = \dfrac{1}{\sqrt{2}} e^{\frac{t^2}{2^2}}$).

3. Verfahren nach Anspruch 2, **dadurch gekennzeichnet, dass** die Koeffizienten der Polynome iterativ durch Bestimmen zunächst des Koeffizienten des Polynoms mit niedrigstem Grad und dann durch aufeinander folgendes Bestimmen der Koeffizienten der Polynome mit höherem Grad erhalten werden.

4. Verfahren nach einem der vorhergehenden Ansprüche, **dadurch gekennzeichnet, dass** das Verfahren außerdem den Schritt des Auswählens einer Zeitperiode für die Übertragung des Funksignals als Funktion des erzeugten Symbols umfasst.

**5.** Verfahren nach Anspruch 1, **dadurch gekennzeichnet, dass** die Kombination eine Kombination von drei paarweise orthogonalen Ultrabreitbandimpulsen $\square(t)$, $\square(t)$ und $\square(t)$ ist, wobei:

$$\left(t\right) = \frac{K}{\sqrt{2}}\, e^{\frac{t^2}{2^2}}$$

wobei $K$ ein Normierungskoeffizient ist und $\square$ der Abstand vom Typ einer Gauß-Kurve ist,

$$\beta(t) = \frac{K}{\sqrt{\pi}\sigma}\left(-\frac{t}{\sigma}\right)e^{-\frac{t^2}{2\sigma^2}}$$

$$\gamma(t) = \frac{K}{2\sqrt{\pi}\sigma}\left(1 - 2\left(\frac{t}{\sigma}\right)^2\right)e^{-\frac{t^2}{2\sigma^2}}.$$

**6.** Vorrichtung zum Übertragen von binären Informationen über eine Funkverbindung, die eine Ultrabreitbandmodulation verwendet, **dadurch gekennzeichnet, dass** die Vorrichtung Folgendes umfasst:

- Mittel zum Erzeugen von Symbolen, die mehrere Bits enthalten,
- Mittel zum Auswählen für jedes erzeugte Symbol einer Kombination von wenigstens drei paarweise orthogonalen Ultrabreitbandimpulsen aus einer Gesamtheit von Kombinationen von wenigstens drei paarweise orthogonalen Ultrabreitbandimpulsen, wobei die Gesamtheit von Kombinationen der wenigstens drei paarweise orthogonalen Ultrabreitbandimpulse durch Ausführen von Permutationen an den wenigstens drei Ultrabreitbandimpulsen und durch zeitliches Verketten der wenigstens drei Impulse erhalten wird,
- Mittel zum Übertragen eines Funksignals für jede Kombination von wenigstens drei ausgewählten paarweise orthogonalen Ultrabreitbandimpulsen.

**7.** Verfahren zum Empfangen von binären Informationen über eine Funkverbindung, die eine Ultrabreitbandmodulation verwendet, **dadurch gekennzeichnet, dass** das Verfahren die folgenden Schritte umfasst:

- Empfangen eines Funksignals, das eine Kombination von wenigstens drei paarweise orthogonalen Ultrabreitbandimpulsen enthält,
- Auswählen eines aus Bits zusammengesetzten Symbols, das der Kombination von wenigstens drei paarweise orthogonalen Ultrabreitbandimpulsen aus einer Gesamtheit von Kombinationen von wenigstens drei paarweise orthogonalen Ultrabreitbandimpulsen entspricht, wobei die Gesamtheit von Kombinationen von wenigstens drei paarweise orthogonalen Ultrabreitbandimpulsen durch Ausführen von Permutationen an den wenigstens drei Ultrabreitbandimpulsen und durch zeitliches Verketten der wenigstens drei Impulse erhalten wird.

**8.** Vorrichtung zum Empfangen von binären Informationen über eine Funkverbindung, die eine Ultrabreitbandmodulation verwendet, **dadurch gekennzeichnet, dass** die Vorrichtung Folgendes umfasst:

- Mittel zum Empfangen eines Funksignals, das eine Kombination von wenigstens drei paarweise orthogonalen Ultrabreitbandimpulsen enthält,
- Mittel zum Auswählen eines aus Bits zusammengesetzten Symbols, das der Kombination von wenigstens drei paarweise orthogonalen Ultrabreitbandimpulsen entspricht, aus einer Gesamtheit von Kombinationen von wenigstens drei paarweise orthogonalen Ultrabreitbandimpulsen, wobei die Gesamtheit von Kombinationen von wenigstens drei paarweise orthogonalen Ultrabreitbandimpulsen durch Ausführen von Permutationen an den wenigstens drei Ultrabreitbandimpulsen und durch zeitliches Verketten der wenigstens drei Impulse erhalten wird.

**Claims**

1. Method for transmission of binary information via a radio link using an ultra-wideband modulation, **characterized in that** the method comprises the steps for:

   - formation (E70) of symbols comprising a plurality of bits,
   - selection (E71), for each symbol formed, of a combination of at least three pair-wise orthogonal ultra-wideband pulses from amongst a set of combinations of the at least three pair-wise orthogonal ultra-wideband pulses, the set of combinations of the at least three pair-wise orthogonal ultra-wideband pulses is obtained by performing permutations of the at least three ultra-wideband pulses and by concatenating over time the at least three pulses,
   - transfer (E72), for each combination of at least three pair-wise orthogonal ultra-wideband pulses selected, of a radio signal.

2. Method according to Claim 1, **characterized in that** each ultra-wideband pulse of index n is represented by the following formula:

$$In(t) \; = \; Pn(t)G(t)$$

   with:

   $P_n(t)$: Polynomial of n-th degree $\left( Pn(t) = \sum_{k=0}^{k=n} a_{k,n} t^k \right)$ where $a_{k,n}$ is a coefficient of the polynomial of n-th degree, $k$ an integer number, $n$ is the index of the ultra-wideband pulse, and t is time,

   G($t$): Gaussian function $\left( G(t) = - \dfrac{1}{\sqrt{2\pi}\sigma} e^{-\frac{t^2}{2\sigma^2}} \right).$

3. Method according to Claim 2, **characterized in that** the coefficients of the polynomials are obtained iteratively by first of all determining the coefficient of the polynomial of the smallest degree, then by successively determining the coefficients of the polynomials of higher degree.

4. Method according to any one of the preceding claims, **characterized in that** the method furthermore comprises the step for selection of a time period for transmission of the radio signal as a function of the symbol formed.

5. Method according to Claim 1, **characterized in that** the combination is a combination of the three pair-wise orthogonal ultra-wideband pulses □($t$), □($t$) and □($t$), in which:

$$\alpha(t) = \frac{K}{\sqrt{2\pi}\sigma} e^{-\frac{t^2}{2\sigma^2}}$$

   where K is a normalization coefficient and □ is the standard deviation of a Gaussian.

$$\beta(t) = \frac{K}{\sqrt{\pi}\sigma} \left( -\frac{t}{\sigma} \right) e^{-\frac{t^2}{2\sigma^2}}$$

$$\gamma(t) = \frac{K}{2\sqrt{\pi}\sigma} \left( 1 - 2 \left( \frac{t}{\sigma} \right)^2 \right) e^{-\frac{t^2}{2\sigma^2}}$$

6. Device for transmission of binary information via a radio link using an ultra-wideband modulation, **characterized in that** the device comprises:

   - means for formation of symbols comprising a plurality of bits,
   - means for selection, for each symbol formed, of a combination of at least three pair-wise orthogonal ultra-wideband pulses from amongst a set of combinations of the at least three pair-wise orthogonal ultra-wideband pulses, the set of combinations of the at least three pair-wise orthogonal ultra-wideband pulses is obtained by performing permutations of the at least three ultra-wideband pulses and by concatenating over time the at least three pulses,
- means for transfer, for each combination of at least three pair-wise orthogonal ultra-wideband pulses selected, of a radio signal.

7. Method for receiving binary information via a radio link using an ultra-wideband modulation, **characterized in that** the method comprises the steps for:

- reception of a radio signal comprising a combination of at least three pair-wise orthogonal ultra-wideband pulses,
- selection of a symbol composed of bits corresponding to the combination of at least three pair-wise orthogonal ultra-wideband pulses from amongst a set of combinations of the at least three pair-wise orthogonal ultra-wideband pulses, the set of combinations of the at least three pair-wise orthogonal ultra-wideband pulses is obtained by performing permutations of the at least three ultra-wideband pulses and by concatenating over time the at least three pulses.

8. Device for receiving binary information via a radio link using an ultra-wideband modulation, **characterized in that** the device comprises:

- means for reception of a radio signal comprising a combination of at least three pair-wise orthogonal ultra-wideband pulses,
- means of selection of a symbol composed of bits corresponding to the combination of at least three pair-wise orthogonal ultra-wideband pulses from amongst a set of combinations of the at least three pair-wise orthogonal ultra-wideband pulses, the set of combinations of the at least three pair-wise orthogonal ultra-wideband pulses is obtained by performing permutations of the at least three ultra-wideband pulses and by concatenating over time the at least three pulses.

10

20

| Emetteur | | Récepteur |

# Fig. 1

305

10

300

302

303

304

| Module émission | | Proc |
| | | ROM |
| | | RAM |
| | | SD |

301

# Fig. 3

405　　　　　　　　　　　　　　　　　　20

Module
Réception　　　　　　　　　Proc　　　400

　　　　　　　　　　　　　ROM　　　402

　　　　　　　　　　　　　RAM　　　403

　　　　　　　　　　　　　SD　　　404

401

**Fig. 4**

E70　　Groupement en
séquences binaires

E71　　Sélection
combinaison

E72　　Transfert signal

**Fig. 7**

E80　　Réception signal

E81　　Sélection symbole
binaire correspondante

**Fig. 8**

Fig. 2a

Fig. 2b

Fig. 2c

Fig. 5

T'1

T

Fig. 6a

T'2

T

Fig. 6b

## RÉFÉRENCES CITÉES DANS LA DESCRIPTION

**Documents brevets cités dans la description**

- WO 0122672 A1

- WO P1748577 A2

**Littérature non-brevet citée dans la description**

- Achieving spectrum efficiency through signal design for ultra wide band sensor networks. **WEIHUA GAO et al.** SWARM INTELLIGENCE SYMPOSIUM. IEEE, 30 Mars 2009, 122-128